# EUROPÄISCHE PATENTSCHRIFT

(11) **EP 0 937 345 B1**
(45) Veröffentlichungstag und Bekanntmachung des Hinweises auf die Patenterteilung: **25.04.2007**
(21) Anmeldenummer: 97909138.6
(22) Anmeldetag: 17.09.1997
(51) Int. Cl.: H04J 3/22

(54) **VERFAHREN UND ANORDNUNG ZUM MULTIPLEXEN EINER VIELZAHL DIGITALER DATENSTRÖME ZU EINEM DIGITALEN GESAMTDATENSTROM SOWIE VERFAHREN UND ANORDNUNG ZUM DEMULTIPLEXEN EINES DIGITALEN GESAMTDATENSTROMS ZU EINER VIELZAHL DIGITALER DATENSTRÖME**
METHOD AND DEVICE FOR MULTIPLEXING A PLURALITY OF DIGITAL DATA FLOWS INTO ONE GLOBAL DIGITAL DATA FLOW, AND METHOD AND DEVICE FOR DEMULTIPLEXING ONE GLOBAL DIGITAL DATA FLOW INTO A PLURALITY A DIGITAL DATA FLOWS
PROCEDE ET DISPOSITIF DE MULTIPLEXAGE D'UNE MULTITUDE DE FLUX DE DONNEES NUMERIQUES EN UN FLUX GLOBAL DE DONNEES NUMERIQUES, ET PROCEDE ET DISPOSITIF DE DEMULTIPLEXAGE D'UN FLUX GLOBAL DE DONNEES NUMERIQUES EN UNE MULTITUDE DE FLUX DE DONNEES NUMERIQUES

(30) Priorität: 08.11.1996 DE 19646244
(43) Veröffentlichungstag der Anmeldung: 25.08.1999
(73) Patentinhaber: SIEMENS AKTIENGESELLSCHAFT, 80333 München (DE)
(72) Erfinder: SEYTTER, Fritz, D-81667 München (DE)
(86) Internationale Anmeldenummer: PCT/DE1997/002090
(87) Internationale Veröffentlichungsnummer: WO 1998/021846

(56) Entgegenhaltungen:
- EP-A- 0 054 120
- EP-A- 0 634 840
- WO-A-93/25030
- SCHAPHORST R A: "STATUS OF H.324/THE VIDEOCONFERENCING STANDARD FOR THE PUBLIC SWITCHED TELEPHONE NETWORK AND MOBILE RADIO" OPTICAL ENGINEERING, Bd. 35, Nr. 1, Januar 1996, Seiten 109-112, XP000631417
- PATENT ABSTRACTS OF JAPAN vol. 018, no. 595 (E-1630), 14.November 1994 & JP 06 225258 A (MATSUSHITA ELECTRIC IND CO LTD), 12.August 1994,

## Beschreibung

### 1. Bezeichnung

Verfahren und Anordnung zum Multiplexen einer Vielzahl digitaler Datenströme zu einem digitalen Gesamtdatenstrom sowie Verfahren und Anordnung zum Demultiplexen eines digitalen Gesamtdatenstroms zu einer Vielzahl digitaler Datenströme

### 2. Technischer Hintergrund

Im Bereich Multimedia gilt es, verschiedenste Arten digitaler Datenströme in irgendeiner Form gemeinsam zu übertragen. Der Einfluß von bei der Übertragung häufig auftretenden Übertragungsfehlern sollte für einen Benutzer eines Systems, welches die übertragenen Daten decodiert und dem Benutzer zur Verfügung stellt, möglichst wenig bemerkbar sein.

Unter digitalen Datenströmen sind im weiteren z. B. folgende keineswegs abschließend zu verstehende Arten digitaler Daten zu verstehen, die üblicherweise in Datenpaketen vorgebbarer Größe, d.h. mit einer vorgebbaren Zahl von Bytes, verarbeitet werden:
- digitale Daten, mit denen Text beschrieben wird, z. B. eine Text-Datei,
- Audiodaten,
- Videodaten, oder
- digitale Steuerungsdaten zur Steuerung eines beliebigen technischen Systems.
   Zu diesem Zweck ist es aus dem Dokument [1] bekannt, eine Maßnahme zur Fehlererkennung und/oder Fehlerkorrektur für die Datenströme vorzusehen und die Datenströme zu einem Gesamtdatenstrom zu multiplexen. Dabei ist es ferner aus [1] und [6] bekannt, die Maßnahme zur Fehlererkennung und/oder Fehlerkorrektur für jeden Datenstrom, der übertragen werden soll, getrennt durchzuführen.
   Unter einer Maßnahme zur Fehlererkennung und/oder Fehlerkorrektur ist im weiteren ein Verfahren zu verstehen, mit dem es möglich ist, aufgetretene Fehler bei der Übertragung eines Datenstroms zu erkennen und/oder zu korrigieren.
   Es sind verschiedenste Prinzipien von Maßnahmen zur Fehlererkennung und/oder Fehlerkorrektur bekannt, z. B. sogenannte Wiederhol-Anforderungs-Verfahren (Automatic Repeat Request Verfahren, ARQ Typ I, ARQ Typ II) oder auch sogenannte Verfahren zur Vorwärtsfehlerkorrektur. Im Rahmen der Verfahren zur Vorwärtsfehlerkorrektur wird unterschieden zwischen fehlererkennenden Verfahren und fehlerkorrigierenden Verfahren.
   Die bekannte Vorgehensweise birgt vor allem den Nachteil einer erheblichen Ineffizienz in sich, da ein großer Teil an Header Information und Information, die zur Fehlererkennung und/oder Fehlerkorrektur benötigt wird, erforderlich ist. Dieses Problem wächst stark an mit zunehmender Anzahl zu multiplexender und zu übertragender Datenströme. Das Problem kann sogar so groß werden, daß ab einer bestimmten Zahl zu multiplexender Datenströme, abhängig von der Größe der Datenpakete, gar keine Information über die Datenströme, sondern nur Header Information bzw. Information zur Fehlererkennung und/oder Fehlerkorrektur übertragen würde.
   Aus [4] ist eine Anordnung bekannt, bei dem ein Datenstrom in 3 Teildatenströme aufgeteilt wird (Nutzinformation, spezifische Kontrollinformation, allgemeine Kontrollinformation). Für die 3 Teildatenströme wird jeweils das gleiche Fehlerkorrekturverfahren durchgeführt.
   In [5] ist eine Bildübertragungseinheit beschrieben, bei der ein Videodatenstrom und ein Audiodatenstrom separiert dem gleichen Fehlerkorrekturverfahren unterzogen wird.
   Aus [7] ist ein Fehlerschutzverfahren bekannt, bei dem zwei Signale mit unterschiedlichen Fehlerschutzanforderungen mit zwei Fehlerschutzcodes kombiniert werden.
   In [8] wird ein Verfahren beschrieben, bei dem die Zerlegung oder Zusammenfassung von Rahmenstrukturen, wie sie in SDH- oder SONET-Systemen gegeben ist, mit einem niedrigen Bedarf an Hardware ermöglicht wird.

### 3. Kurzbeschreibung der Erfindung

Der Erfindung liegt das Problem zugrunde, Verfahren und Anordnungen zum Multiplexen und Demultiplexen von Datenströmen anzugeben, mit denen eine effizientere Maßnahme zur Fehlererkennung und/oder Fehlerkorrektur möglich wird, als dies mit dem bekannten Verfahren möglich war.

Das Problem wird durch das Verfahren gemäß Patentanspruch 1, das Verfahren gemäß Patentanspruch 2, die Anordnung gemäß Patentanspruch 9, und die Anordnung gemäß Patentanspruch 10 gelöst.

Gemäß Patentanspruch 1 wird ein Verfahren zum Multiplexen einer Vielzahl digitaler Datenströme zu einem digitalen Gesamtdatenstrom angegeben,
- bei dem die Datenströme zu mindestens zwei digitalen Zwischendatenströmen gruppiert werden,
- bei dem die Gruppierung derart erfolgt, dass gleichartige Datenströme gemeinsam zu einem Zwischendatenstrom gruppiert werden und ungleichartige Datenströme in unterschiedliche Zwischendatenströme, wobei mindestens ein Zwischendatenstrom aus mindestens zwei Datenströmen gebildet wird,
- bei dem für einen und mindestens einen weiteren der Zwischendatenströme eine Maßnahme zur Fehlererkennung und/oder Fehlerkorrektur des Zwischendatenstroms durchgeführt wird,
- bei dem die Zwischendatenströme zu dem Gesamtdatenstrom gruppiert werden,
- bei dem mindestens zwei Datenströme unterschiedliche vorgebbare Anforderungen bezüglich einer erforderlichen Maßnahme zur Fehlererkennung und/oder Fehlerkorrektur stellen, und
- bei dem Datenströme ähnlicher Anforderung zu einem gemeinsamen Zwischendatenstrom gruppiert werden,
- bei dem mindesten zwei Zwischendatenströme mit unterschiedlichen Maßnahmen zur Fehlererkennung und/oder Fehlerkorrektur behandelt werden.

Gemäß Patentanspruch 2 wird ein Verfahren zum Demultiplexen eines digitalen Gesamtdatenstroms zu einer Vielzahl digitaler Datenströme angegeben,
- bei dem der Gesamtdatenstrom in mindestens zwei digitale Zwischendatenströme aufgeteilt werden
- bei dem die Gruppierung derart erfolgt, dass in dem Gesamtdatenstrom enthaltene gleichartige Datenströme gemeinsam zu einem Zwischendatenstrom gruppiert sind und ungleichartige Datenströme in unterschiedliche Zwischendatenströme, wobei mindestens ein Zwischendatenstrom aus mindestens zwei Datenströmen gebildet ist,
- bei dem für einen und mindestens einen weiteren der Zwischendatenströme eine Maßnahme zur Fehlererkennung und/oder Fehlerkorrektur des Zwischendatenstroms durchgeführt wird,
- bei dem die Zwischendatenströme in die Datenströme aufgeteilt werden,
- bei dem mindestens zwei Datenströme unterschiedliche vorgebbare Anforderungen bezüglich einer erforderlichen Maßnahme zur Fehlererkennung und/oder Fehlerkorrektur stellen, und
- bei dem Datenströme ähnlicher Anforderung zu einem gemeinsamen Zwischendatenstrom gruppiert sind,
- bei dem mindesten zwei Zwischendatenströme mit unterschiedlichen Maßnahmen zur Fehlererkennung und/oder Fehlerkorrektur behandelt werden.

Gemäß Patentanspruch 9 wird eine Anordnung zum Multiplexen einer Vielzahl digitaler Datenströme zu einem Gesamtdatenstrom angegeben,
- bei der eine erste Gruppierungsstufe vorgesehen ist mit mindestens zwei ersten Gruppierungseinheiten, mit denen die Datenströme zu mindestens zwei digitalen Zwischendatenströmen gruppiert werden, wobei die Gruppierung derart erfolgt, dass gleichartige Datenströme gemeinsam zu einem Zwischendatenstrom gruppiert werden und ungleichartige Datenströme in unterschiedliche Zwischendatenströme, wobei mindestens ein Zwischendatenstrom aus mindestens zwei Datenströmen gebildet wird und die Datenströme in unterschiedlichen Zwischendatenströmen unterschiedliche vorgebbare Anforderungen bezüglich einer Maßnahme zur Fehlererkennung und/oder Fehlerkorrektur stellen,
- bei der für einen und mindestens einen der Zwischendatenströme ein Mittel zur Fehlererkennung und/oder Fehlerkorrektur der Zwischendatenströme vorgesehen ist,
- bei der die Mittel mit den ersten Gruppierungseinheiten gekoppelt sind und die Mittel jeweils zur Fehlererkennung und/oder Fehlerkorrektur von Datenströmen ähnlicher Anforderung ausgestaltet sind, wobei mindesten zwei Zwischendatenströme mit unterschiedlichen Maßnahmen zur Fehlererkennung und/oder Fehlerkorrektur behandelt werden, und
- bei der eine zweite Gruppierungsstufe vorgesehen ist mit einer zweiten Gruppierungseinheit, mit der die Zwischendatenströme zu dem Gesamtdatenstrom gruppiert werden.

Gemäß Patentanspruch 10 wird eine Anordnung zum Demultiplexen eines digitalen Gesamtdatenstroms zu einer Vielzahl digitaler Datenströme angegeben,
- bei der eine zweite Gruppierungsstufe vorgesehen ist mit einer zweiten Gruppierungseinheit, mit der der Gesamtdatenstrom in mindestens zwei digitale Zwischendatenströme aufgeteilt wird, wobei in dem Gesamtdatenstrom enthaltene gleichartige Datenströme gemeinsam zu einem Zwischendatenstrom gruppiert sind und ungleichartige Datenströme in unterschiedliche Zwischendatenströme, wobei mindestens ein Zwischendatenstrom aus mindestens zwei Datenströmen gebildet ist und die Datenströme in unterschiedlichen Zwischendatenströmen unterschiedliche vorgebbare Anforderungen bezüglich einer Maßnahme zur Fehlererkennung und/oder Fehlerkorrektur stellen,
- bei der für einen und mindestens einen weiteren der Zwischendatenströme ein Mittel zur Fehlererkennung und/oder Fehlerkorrektur der Zwischendatenströme vorgesehen ist,
- bei der eine erste Gruppierungsstufe vorgesehen ist mit mindestens zwei ersten Gruppierungseinheiten, mit denen mindestens zwei der Zwischendatenströme in die Datenströme (DS) aufgeteilt werden,
- bei der die ersten Gruppierungseinheiten mit den Mitteln gekoppelt sind und die Mittel jeweils zur Fehlererkennung und/oder Fehlerkorrektur von Datenströmen ähnlicher Anforderung ausgestaltet sind, wobei mindestens zwei Zwischendatenströme mit unterschiedlichen Maßnahmen zur Fehlererkennung und/oder Fehlerkorrektur behandelt werden.

Sowohl die Verfahren als auch die Anordnungen weisen den Vorteil auf, dass eine effizientere Fehlererkennung und/oder Fehlerkorrektur möglich wird. Wie im weiteren erläutert wird, wächst der Grad der Effizienz der Fehlererkennung und/oder Fehlerkorrektur sogar mit steigender Zahl von Datenströmen, für die eine Fehlererkennung und/oder Fehlerkorrektur durchgeführt werden soll.

Vorteilhafte Weiterbildungen der Erfindung ergeben sich aus den abhängigen Ansprüchen.

Es ist in einer Weiterbildung sowohl der Verfahren als auch der Anordnungen vorteilhaft, Datenströme, die bezüglich einer erforderlichen Fehlererkennung und/oder Fehlerkorrektur ähnliche Anforderungen stellen, gemeinsam in jeweils einen Zwischendatenstrom zu gruppieren.

Auf diese Weise wird eine dem jeweiligen Bedarf an Fehlererkennung und/oder Fehlerkorrektur für eine Gruppe von Datenströmen angepaßte Gruppierung erreicht, was eine sehr effiziente Fehlererkennung und/oder Fehlerkorrektur ermöglicht.

Dieser Vorteil wird noch dadurch verstärkt, daß in einer Weiterbildung für Zwischendatenströme ein an die jeweiligen Anforderungen angepaßte Fehlererkennung und/oder Fehlerkorrektur vorgesehen wird.

Weiterhin ist es in einer Weiterbildung vorteilhaft, in der zweiten Gruppierungsstufe bzw. bei der Gruppierung der Zwischendatenströme in den Gesamtdatenstrom bzw. bei der Aufteilung des Gesamtdatenstroms in die Zwischendatenströme ein fehlersicheres Verfahren zu verwenden. Durch diese Weiterbildung wird eine weitere Absicherung der Übertragung des Gesamtdatenstroms erreicht, was zu einer weiteren Effizienzsteigerung der Verfahren bzw. der Anordnungen führt.

Um die Verläßlichkeit des Verfahrens zu erhöhen ist es vorteilhaft, zu Beginn des Verfahrens eine Intitialisierungsphase durchzuführen, wobei die Intitialisierungsphase über einen vom Multiplexer bereitgestellten gut fehlergeschützten Daten kanal bei der Übertragung der Daten über das Übertragungsmedium ÜM erfolgt.

Eine weitere Verbesserung wird dadurch erreicht, daß Datenströme, für die keine Fehlererkennung und/oder Fehlerkorrektur erforderlich ist, bei der Gruppierung in die Zwischendatenströme nicht berücksichtigt werden, und diese unmittelbar mit den Zwischendatenströmen zu dem Gesamtdatenstrom gruppiert werden. Diese Weiterbildung führt zu einer Einsparung von Verfahren zur Fehlererkennung und/oder Fehlerkorrektur bei Datenströmen, für die eigentlich keine Fehlererkennung und/oder Fehlerkorrektur erforderlich ist. Dies führt zum einen zur Einsparung von Rechenzeitbedarf bei der Durchführung des Verfahrens mit einem Rechner und zum anderen z.B. zur Einsparung von Multiplexern.

### 4. Kurzbeschreibung der Figuren

In den Figuren ist ein Ausführungsbeispiel der Erfindung dargestellt, welches im weiteren näher erläutert wird.

Es zeigen
- Figur 1: eine Skizze mit zwei Anordnungen, in der symbolisch die Übertragung und Verarbeitung verschiedener Datenströme beschrieben ist;
- Figur 2: eine Skizze, in der eine Anordnung skizziert ist, mit der sowohl ein multiplexen als auch ein demultiplexen von Datenströmen erfolgt;
- Figur 3: ein Ablaufdiagramm, in dem die einzelnen Verfahrensschritte zum Multiplexen der Datenströme zu einem Gesamtdatenstrom dargestellt ist;
- Figur 4: ein Ablaufdiagramm, in dem die einzelnen Verfahrensschritte zum Demultiplexen des Gesamtdatenstroms in die Datenströme dargestellt ist.

### 5. Figurenbeschreibung

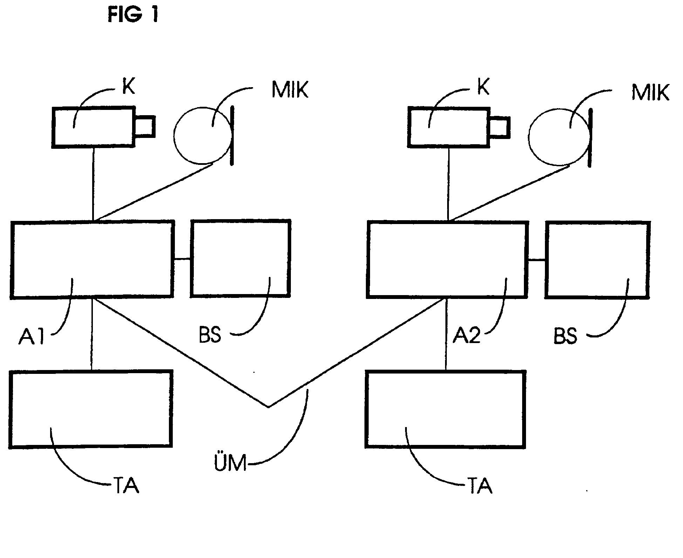

In Figur 1 sind eine erste Anordnung A1 und eine zweite Anordnung A2 dargestellt. Ferner ist für jede Anordnung A1, A2 symbolhaft eine mit der jeweiligen Anordnung A1, A2 gekoppelte Kamera K, ein Mikrophon MIK, ein Bildschirm BS sowie eine Tastatur TA dargestellt. Die erste Anordnung A1 und die zweite Anordnung A2 sind über ein beliebiges Übertragungsmedium ÜM zur Übertragung von Daten miteinander gekoppelt.

Mit der Kamera K wird beispielsweise eine beliebige Folge von Bildern aufgenommen, digitalisiert und der jeweiligen Anordnung A1, A2 zugeführt und dort gespeichert.

Mit dem Mikrophon MIK werden beispielsweise beliebige Audiodaten aufgenommen, digitalisiert und der jeweiligen Anordnung A1, A2 zugeführt und dort gespeichert.

Digitale Daten können weiterhin beispielsweise auch manuell durch einen Benutzer über die Tastatur TA in die jeweilige Anordnung A1, A2 eingegeben werden und dort gespeichert werden.

In verschiedensten Anwendungsgebieten der digitalen Kommunikationstechnik, z. B. im Bereich Multimedia, gilt es, verschiedenste Arten von digitalen Daten zwischen Kommunikationspartnern, beispielsweise zwischen der ersten Anordnung A1 und der zweiten Anordnung A2 zu übertragen. Selbstverständlich kann es vorgesehen sein, die digitalen Daten zwischen einer beliebigen Anzahl von Anordnungen zu übertragen.

Die digitalen Daten werden im weiteren als digitale Datenströme DS bezeichnet.

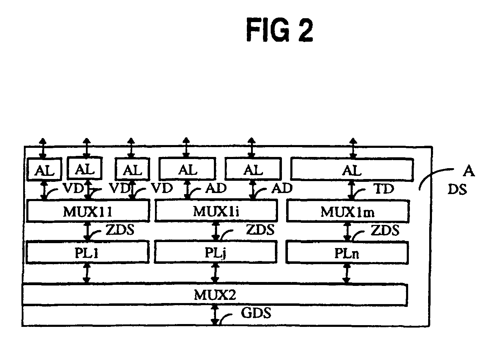

Unter digitalen Datenströmen DS sind im weiteren z. B. folgende keineswegs abschließend zu verstehende Arten digitaler Daten zu verstehen, die üblicherweise in Datenpaketen vorgebbarer Größe, d.h. mit einer vorgebbaren Zahl von Bytes, verarbeitet werden (vgl. Figur 2):
- digitale Daten, mit denen ein Text beschrieben wird TD, z.B. eine Text-Datei,
- Audiodaten AD,
- Videodaten VD, oder
- digitale Steuerungsdaten (nicht dargestellt) zur Steuerung eines beliebigen technischen Systems.

In Figur 2 ist der Aufbau einer Anordnung A zum Multiplexen bzw. zum Demultiplexen der Datenströme DS dargestellt, die in den in Figur 1 dargestellten Anordnungen A1, A2 enthalten sind. Die Anordnung A wird im weiteren derart beschrieben, daß sie je nach Richtung des Datenflusses und somit je nach "Betreibungsrichtung" der Anordnung A als Anordnung A zum Multiplexen bzw. zum Demultiplexen ausgestaltet ist. Dies ist symbolhaft durch Doppelpfeile in Figur 2 dargestellt.

Symbolhaft sind in Figur 2 sogenannte Applikationsschichten AL dargestellt.

Ein möglicher Aufbau der Applikationsschichten AL ist in [2] beschrieben. Der dort beschriebene Aufbau der Applikationsschicht AL ist für die Erfindung jedoch keineswegs wesentlich. Im Rahmen des Multiplexens sind die Applikationsschichten AL lediglich symbolhaft als Mittel zu verstehen, mit denen jeweils ein Datenstrom DS, üblicherweise in Datenpaketen vorgebbarer Größe, einer im weiteren beschriebenen ersten Gruppierungsstufe MUX1 zugeführt wird. Wird die Anordnung A zum Demultiplexen eingesetzt, sind die Applikationsschichten AL symbolhaft als Mittel zu verstehen, mit denen jeweils ein Datenstrom DS empfangen wird und gemäß einer vorgebbaren Anwendung weiterverarbeitet oder einfach weitergeleitet wird zu einer weiteren Anwendung.

Es tritt häufig die Situation auf, daß eine Vielzahl gleichartiger und verschiedenartiger Datenströme DS übertragen werden sollen.

Unter gleichartigen Datenströmen DS sind allgemein Datenströme DS zu verstehen, die bezüglich des Bedarfs an Übertragungsqualität und damit verbunden bezüglich des Bedarfs an Maßnahmen zur Fehlererkennung und/oder an Fehlerkorrektur der Datenströme DS in etwa gleiche Anforderungen stellen.

Beispielsweise sind für die Übertragung von Videodatenströmen VD geringere Anforderungen an die Übertragungsqualität vorhanden als für die Übertragung von Text-Dateien TD.

Sehr geringe Anforderungen an die Übertragungsqualität werden bei der Übertragung von Audiodatenströmen AD gestellt.

Mit steigenden Anforderungen an die Übertragungsqualität der Datenströme DS wachsen bei gleichbleibender Qualität, d.h. bei gleichbleibender Fehlerrate, eines zur Übertragung der Datenströme DS zwischen den Anordnungen A1, A2 verwendeten Übertragungsmediums ÜM die Anforderungen an zu verwendende Maßnahmen zur Fehlererkennung und/oder zur Fehlerkorrektur der Datenströme DS. Die einzelnen Charakteristika der Maßnahmen zur Fehlererkennung und/oder zur Fehlerkorrektur sind dem Fachmann geläufig.

Die von den Applikationsschichten AL zur Verfügung gestellten Datenströme DS werden der ersten Gruppierungsstufe MUX1 zugeführt.

Die erste Gruppierungsstufe MUX1 enthält mindestens zwei erste Gruppierungseinheiten MUX1i, i = 1..m, mit denen die Datenströme DS zu mindestens zwei digitalen Zwischendatenströmen ZDS gruppiert werden.

Die ersten Gruppierungseinheiten MUX1i können z. B. bei der Anordnung zum Multiplexen der Datenströme DS als Multiplexer MUX1i ausgestaltet sein, mit denen die dem jeweiligen Multiplexer MUX1i zugeführten Datenströme DS zu dem Zwischendatenstrom ZDS gemultiplext werden. Die Multiplexer MUX1i können beliebig ausgestaltet sein. Eine Fehlersicherung in den Multiplexern MUX1i ist in der erste Gruppierungsstufe MUX1 nicht erforderlich.

Bei der Anordnung A zum Demultiplexen wird der dem jeweiligen Multiplexer MUX1i zugeführte Zwischendatenstrom ZDS in dem Multiplexer MUX1i in die entsprechenden Datenströme DS aufgeteilt.

Ferner ist für mindestens einen der Zwischendatenströme ZDS ein Mittel PLj, j = 1..n zur Fehlererkennung und/oder Fehlerkorrektur der Zwischendatenströme ZDS vorgesehen. Jedes Mittel PLj ist über einen Eingang EPLj mit einem Ausgang AMUX1i einer ersten Gruppierungseinheit MUX1i gekoppelt.

Je nachdem, ob die Anordnung A zum Multiplexen oder zum Demultiplexen eingesetzt wird, ist das Mittel PLj derart ausgestaltet, daß je nach verwendeten Maßnahmen zur Fehlererkennung und/oder Fehlerkorrektur z.B. die zur Fehlererkennung und/oder Fehlerkorrektur erforderliche für den Zwischendatenstrom ZDS generiert und dem Zwischendatenstrom ZDS hinzugefügt wird oder die entsprechende Information ausgewertet wird. Die konkrete Ausgestaltung des Mittels PLj richtet sich nach den für den jeweiligen Zwischendatenstrom ZDS gewünschten Maßnahmen zur Fehlererkennung und/oder Fehlerkorrektur.

Dies birgt vor allem den Vorteil in sich, daß an den jeweiligen Zwischendatenstrom ZDS angepaßte Maßnahmen zur Fehlererkennung und/oder Fehlerkorrektur vorgesehen werden können, was zu einer sehr effizienten Fehlererkennung und/oder Fehlerkorrektur führt.

In einer Weiterbildung der Anordnung A ist es vorgesehen, daß jeweils mindestens einer ersten Gruppierungseinheit MUX1i mehrere gleichartige Datenströme DS zugeführt wird. Dies führt dazu, daß in diesem Fall mindestens ein Zwischendatenstrom ZDS gebildet wird, der gleichartige Datenströme DS, z. B. nur Videodatenströme VD, nur Audiodatenströme AD oder nur Text-Dateien TD enthält. Allgemein kann das Prinzip der Gruppierung gleichartiger Datenströme DS zu einem Zwischendatenstrom ZDS für eine beliebige Anzahl von Arten von Datenströmen DS eingesetzt werden.

Gemeinsam mit einer weiteren Ausgestaltung der Anordnung A, bei der mindestens ein Teil der Mittel PLj zur Fehlererkennung und/oder Fehlerkorrektur derart ausgestaltet ist, daß die Fehlererkennung und/oder die Fehlerkorrektur für den jeweiligen Zwischendatenstrom ZDS an die Anforderungen angepaßt sind, wird der Vorteil einer sehr effizienten Fehlererkennung und/oder Fehlerkorrektur durch die beschriebene Weiterbildung weiter erheblich verstärkt.

Die Ausgänge APLj der Mittel PLj sind mit Eingängen EMUX2 einer zweiten Gruppierungsstufe MUX2 gekoppelt. Die zweite Gruppierungsstufe MUX2 enthält eine zweite Gruppierungseinheit, mit der die Zwischendatenströme ZDS zu dem Gesamtdatenstrom GDS gruppiert werden.

Die zweite Gruppierungseinheit kann ebenfalls als Multiplexer ausgestaltet sein. Es hat sich als vorteilhaft herausgestellt, wenn für die zweite Gruppierungseinheit eine eigene Fehlersicherung für die Datenübertragung vorgesehen ist. Eine mögliche Realisierung eines solchen Multiplexers ist z. B. in [1] beschrieben.

Von der "Betriebsrichtung" der Anordnung A hängt wiederum ab, ob in der zweiten Gruppierungsstufe MUX2 mehrere Zwischendatenströme ZDS zu dem Gesamtdatenstrom GDS gruppiert werden (beim Multiplexen der Datenströme DS) oder ob in der zweiten Gruppierungsstufe MUX2 der Gesamtdatenstrom GDS zu den Zwischendatenströmen ZDS gruppiert wird (beim Demultiplexen des Gesamtdatenstroms GDS).

In einer Ausgestaltung ist es ferner vorgesehen, für Datenströme DS, für die gar keine Fehlererkennung und/oder Fehlerkorrektur erforderlich ist, kein Mittel PLj zur Fehlererkennung und/oder Fehlerkorrektur vorzusehen. In diesem Fall ist der Ausgang der entsprechenden Applikationsschichten AL direkt mit Eingängen EMUX2 der zweiten Gruppierungsstufe MUX2 gekoppelt.

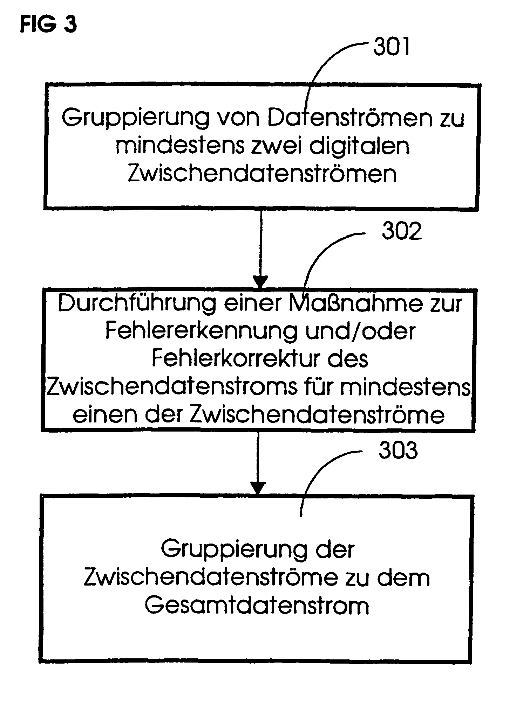

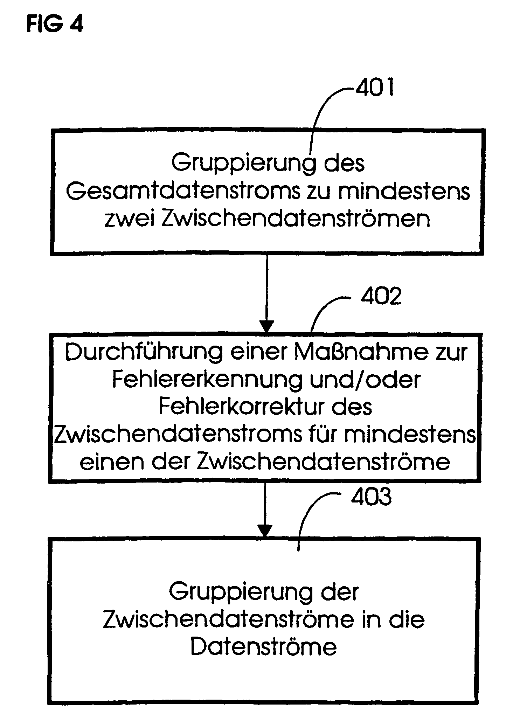

In den Figuren 3 und 4 sind Ablaufdiagramme dargestellt, mit denen die Verfahrensschritte des Verfahrens zum Multiplexen der Datenstöme DS (vgl. Figur 3) bzw. zum Demultiplexen des Gesamtdatenstroms GDS (vgl. Figur 4) beschrieben werden.

Die Verfahren entsprechen den im Zusammenhang mit der Anordnung A beschriebenen Schritten zum Multiplexen bzw. zum Demultiplexen.

Beim Verfahren zum Multiplexen der Datenströme DS werden in einem ersten Schritt 301 die Datenströme DS zu mindestens zwei digitalen Zwischendatenströmen ZDS gruppiert, z. B. durch Multiplexen der Datenströme DS.

Für mindestens einen der Zwischendatenströme ZDS wird in einem zweiten Schritt 302 eine Maßnahme zur Fehlererkennung und/oder Fehlerkorrektur des Zwischendatenstroms ZDS durchgeführt.

Maßnahmen zur Fehlererkennung und/oder Fehlerkorrektur wurden oben im Zusammenhang mit der Beschreibung der Anordnung A erläutert.

In einem dritten Schritt 303 werden schließlich die Zwischendatenströme ZDS zu dem Gesamtdatenstrom GDS gruppiert, der nunmehr übertragen wird.

Die Verfahrensschritte zum Demultiplexen des Gesamtdatenstroms sind invers zu den oben beschriebenen Verfahrensschritten zum Multiplexen der Datenströme DS.

Dies bedeutet, daß der Gesamtdatenstrom GDS in einem ersten Schritt 401 zu mindestens zwei Zwischendatenströmen ZDS gruppiert wird.

In einem zweiten Schritt 402 wird für mindestens einen der Zwischendatenströme ZDS eine Maßnahme zur Fehlererkennung und/oder Fehlerkorrektur des Zwischendatenstroms ZDS durchgeführt.

In einem dritten Schritt 403 werden die Zwischendatenströme ZDS in die Datenströme DS gruppiert werden, die beispielsweise einer beliebigen Anwendung zur Verfügung gestellt werden..

Im weiteren beschriebene Weiterbildungen sind sowohl für das Verfahren zum Multiplexen als auch für das Verfahren zum Demultiplexen vorgesehen.

Wie oben beschrieben ist entsprechend einer Ausgestaltung der Anordnung A vorgesehen, daß für den Fall, daß mindestens zwei Datenströme DS unterschiedliche Anforderungen bezüglich erforderlicher Maßnahmen zur Fehlererkennung und/oder Fehlerkorrektur aufweisen, Datenströme DS ähnlicher Anforderungen zu einem gemeinsamen Zwischendatenstrom ZDS zu gruppieren.

Es ist ferner in einer Weiterbildung vorgesehen, für mindestens einen Teil der Zwischendatenströme ZDS an die Anforderungen angepaßte Maßnahmen zur Fehlererkennung und/oder Fehlerkorrektur für den jeweiligen Zwischendatenstrom ZDS einzusetzen.

Es hat sich wie oben beschrieben als vorteilhaft herausgestellt, bei der Gruppierung der Zwischendatenströme ZDS in den Gesamtdatenstrom GDS bzw. bei der Gruppierung des Gesamtdatenstroms GDS in die Zwischendatenströme ZDS ein fehlersicheres Verfahren zu verwenden.

Ein fehlersicheres Verfahren ist in diesem Zusammenhang beispielsweise das ITU-H.223/Annex A-Verfahren, welches in [1] beschrieben ist.

Weiterhin ist es in einer Ausgestaltung der Verfahren vorgesehen, zu Beginn des Verfahrens eine Intitialisierungsphase durchzuführen, die über ein fehlersicheres Übertragungsmedium ÜM erfolgt. Unter einem fehlersicheren Übertragungsmedium ÜM ist ein Übertragungsmedium ÜM zu verstehen, bei dem gewährleistet ist, daß bei der Datenübertragung keine Fehler auftreten können. Auf diese Weise kann eine verläßliche Initialisierung der weiteren Verfahrensschritte erfolgen.

Es hat sich ferner als vorteilhaft herausgestellt, Datenströme DS, für die keine Fehlererkennung und/oder Fehlerkorrektur erforderlich ist, bei der Gruppierung in die Zwischendatenströme ZDS nicht zu berücksichtigen. Diese Art der Datenströme DS, z. B. bei niedrigen Anforderungen an die Audioqualtität Audiodatenströme AD, werden unmittelbar mit den Zwischendatenströmen ZDS zu dem Gesamtdatenstrom GDS gruppiert.

Es ist abschließend anzumerken, daß die einzelnen Gruppierungseinheiten MUX1i, MUX2 bzw. Multiplexer MUX1i, MUX2 sowohl in Hardware als auch deren Funktionalität in Software realisiert sein kann.

Im Rahmen dieses Dokuments wurden folgende Veröffentlichungen zitiert:
[1] ITU-T Draft Recommendation H.223/Annex A, International Telecommunication Union, Telecommunication Standardization Sector, August 1996
[2] ITU-T Draft Recommendation H.223, International Telecommunication Union, Telecommunication Standardization Sector, August 1996
   erhältlich im Internet am 6.11.1996 unter der folgenden FTP-Adresse:
   ftp://ftp.std.com/vendors/PictureTel/h223
[3] ITU-T Draft Recommendation H.324, International Telecommunication Union, Telecommunication Standardization Sector, S. 6 - 9, November 1995
   erhältlich im Internet am 6.11.1996 unter der folgenden FTP-Adresse:
   ftp://ftp.std.com/vendors/PictureTel/h324
[4] GB 2 290 011 A
[5] JP 8-274 785 A2
[6] R.A. Schaphorst: "Status of H.324/The Videoconferencing Standard for the Public Switched Telephone Network and Mobile Radio", Optical Engineering, Bd. 35, Nr. 1, Januar 1996, Seiten 109-112
[7] EP-A 0 634 840
[8] WO-A 93/25030

## Patentansprüche

1. Verfahren zum Multiplexen einer Vielzahl digitaler Datenströme (DS) zu einem digitalen Gesamtdatenstrom (GDS), bei dem
- die Datenströme (DS) zu mindestens zwei digitalen Zwischendatenströmen (ZDS) gruppiert werden,
- die Gruppierung derart erfolgt, dass gleichartige Datenströme (DS) gemeinsam zu einem Zwischendatenstrom (ZDS) gruppiert werden und ungleichartige Datenströme (DS) in unterschiedliche Zwischendatenströme (ZDS), wobei mindestens ein Zwischendatenstrom (ZDS) aus mindestens zwei Datenströmen gebildet wird (DS),
- für einen und mindestens einen weiteren der Zwischendatenströme (ZDS) jeweils eine Maßnahme zur Fehlererkennung und/oder Fehlerkorrektur des Zwischendatenstroms (ZDS) durchgeführt wird,
- die Zwischendatenströme (ZDS) zu dem Gesamtdatenstrom (GDS) gruppiert werden,
- mindestens zwei Datenströme (DS) unterschiedliche vorgebbare Anforderungen bezüglich einer erforderlichen Maßnahme zur Fehlererkennung und/oder Fehlerkorrektur stellen,
- Datenströme (DS) ähnlicher Anforderung zu einem gemeinsamen Zwischendatenstrom (ZDS) gruppiert werden und
- mindestens zwei Zwischendatenströme mit unterschiedlichen Maßnahmen zur Fehlererkennung und/oder Fehlerkorrektur behandelt werden.

2. Verfahren zum Demultiplexen eines digitalen Gesamtdatenstroms (GDS) zu einer Vielzahl digitaler Datenströme (DS), bei dem
- der Gesamtdatenstrom (GDS) in mindestens zwei digitale Zwischendatenströme (ZDS) aufgeteilt wird, wobei in dem Gesamtdatenstrom (GDS) enthaltene gleichartige Datenströme (DS) gemeinsam zu einem Zwischendatenstrom (ZDS) gruppiert sind und ungleichartige Datenströme (DS) in unterschiedliche Zwischendatenströme (ZDS), wobei mindestens ein Zwischendatenstrom (ZDS) aus mindestens zwei Datenströmen gebildet ist (DS),
- für einen und mindestens einen weiteren der Zwischendatenströme (ZDS) jeweils eine Maßnahme zur Fehlererkennung und/oder Fehlerkorrektur des Zwischendatenstroms (ZDS) durchgeführt wird,
- die Zwischendatenströme (ZDS) in die Datenströme (DS) aufgeteilt werden,
- mindestens zwei Datenströme (DS) unterschiedliche vorgebbare Anforderungen bezüglich einer erforderlichen Maßnahme zur Fehlererkennung und/oder Fehlerkorrektur stellen,
- Datenströme (DS) ähnlicher Anforderung zu einem gemeinsamen Zwischendatenstrom (ZDS) gruppiert sind und
- mindestens zwei Zwischendatenströme mit unterschiedlichen Maßnahmen zur Fehlererkennung und/oder Fehlerkorrektur behandelt werden.

3. Verfahren nach Anspruch 1 oder 2,
bei dem mindestens ein Teil der Gruppierungen bzw. Einteilungen durch Multiplexen bzw. Demultiplexen der Daten erfolgt.

4. Verfahren nach einem der vorhergehenden Ansprüche,
bei dem für mindestens einen Teil der Zwischendatenströme (ZDS) die Maßnahme zur Fehlererkennung und/oder Fehlerkorrektur derart ausgestaltet ist, dass die Fehlererkennung und/oder Fehlerkorrektur für den jeweiligen Zwischendatenstrom (ZDS) an die vorgebbare Anforderung angepasst ist.

5. Verfahren nach Anspruch 1 oder nach Anspruch 3 oder 4 in Kombination mit Anspruch 1, bei dem bei der Gruppierung der Zwischendatenströme (ZDS) in den Gesamtdatenstrom (GDS) ein fehlersicheres Verfahren verwendet wird.

6. Verfahren nach Anspruch 2 oder nach Anspruch 3 oder 4 in Kombination mit Anspruch 2, bei dem bei der Aufteilung des Gesamtdatenstroms (GDS) in die Zwischendatenströme (ZDS) ein fehlersicheres Verfahren verwendet wird.

7. Verfahren nach einem der Ansprüche 1 bis 6,
- bei dem zu Beginn des Verfahrens eine Initialisierungsphase durchgeführt wird, und
- bei dem die Initialisierungsphase über ein fehlersicheres Übertragungsmedium erfolgt.

8. Verfahren nach einem der Ansprüche 1 bis 7,
- bei dem Datenströme (DS), für die keine Fehlererkennung und/oder Fehlerkorrektur erforderlich ist, bei der Gruppierung in die Zwischendatenströme (ZDS) nicht berücksichtigt werden, und
- bei dem diese Datenströme (DS) unmittelbar mit den Zwischendatenströmen (ZDS) zu dem Gesamtdatenstrom (GDS) gruppiert werden.

9. Anordnung zum Multiplexen einer Vielzahl digitaler Datenströme (DS) zu einem Gesamtdatenstrom (GDS), bei der
- eine erste Gruppierungsstufe (MUX1) vorgesehen ist mit mindestens zwei ersten Gruppierungseinheiten
(MUX1i, i = 1..m), mit denen die Datenströme (DS) zu mindestens zwei digitalen Zwischendatenströmen (ZDS) gruppiert werden, wobei die Gruppierung derart erfolgt, dass gleichartige Datenströme (DS) gemeinsam zu einem Zwischendatenstrom (ZDS) gruppiert werden und ungleichartige Datenströme (DS) in unterschiedliche Zwischendatenströme (ZDS), wobei mindestens ein Zwischendatenstrom (ZDS) aus mindestens zwei Datenströmen (DS) gebildet wird und die Datenströme (DS) in unterschiedlichen Zwischendatenströmen (ZDS) unterschiedliche vorgebbare Anforderungen bezüglich einer Maßnahme zur Fehlererkennung und/oder Fehlerkorrektur stellen,
- für einen und mindestens einen weiteren der Zwischendatenströme (ZDS) ein Mittel (PLj, j = 1..n) zur Fehlererkennung und/oder Fehlerkorrektur der Zwischendatenströme (ZDS) vorgesehen ist,
- die Mittel (PLj) mit den ersten Gruppierungseinheiten (MUX1i) gekoppelt sind und die Mittel (PLj) jeweils zur Fehlererkennung und/oder Fehlerkorrektur von Datenströmen (DS) ähnlicher Anforderung ausgestaltet sind, wobei mindestens zwei Zwischendatenströme mit unterschiedlichen Maßnahmen zur Fehlererkennung und/oder Fehlerkorrektur behandelt werden, und
- eine zweite Gruppierungsstufe (MUX2) vorgesehen ist mit einer zweiten Gruppierungseinheit (MUX2), mit der die Zwischendatenströme (ZDS) zu dem Gesamtdatenstrom (GDS) gruppiert werden.

10. Anordnung zum Demultiplexen eines digitalen Gesamtdatenstroms (GDS) zu einer Vielzahl digitaler Datenströme (DS), bei der
- eine zweite Gruppierungsstufe (MUX2) vorgesehen ist mit einer zweiten Gruppierungseinheit (MUX2), mit der der Gesamtdatenstrom (GDS) in mindestens zwei digitale Zwischendatenströme (ZDS) aufgeteilt wird, wobei in dem Gesamtdatenstrom (GDS) enthaltene gleichartige Datenströme (DS) gemeinsam zu einem Zwischendatenstrom (ZDS) gruppiert sind und ungleichartige Datenströme (DS) in unterschiedliche Zwischendatenströme (ZDS), wobei mindestens ein Zwischendatenstrom (ZDS) aus mindestens zwei Datenströmen (DS) gebildet ist und die Datenströme (DS) in unterschiedlichen Zwischendatenströmen (ZDS) unterschiedliche vorgebbare Anforderungen bezüglich einer Maßnahme zur Fehlererkennung und/oder Fehlerkorrektur stellen,
- für einen und mindestens einen weiteren der Zwischendatenströme (ZDS) ein Mittel (PLj, j = 1..n) zur Fehlererkennung und/oder Fehlerkorrektur der Zwischendatenströme (ZDS) vorgesehen ist,
- bei der eine erste Gruppierungsstufe (MUX1) vorgesehen ist mit mindestens zwei ersten Gruppierungseinheiten
(MUX1i, i = 1..m), mit denen mindestens zwei der Zwischendatenströme (ZDS) in die Datenströmen (DS) aufgeteilt werden,
- bei der die ersten Gruppierungseinheiten (MUX1i) mit den Mitteln (PLj) gekoppelt sind und die Mittel (PLj) jeweils zur Fehlererkennung und/oder Fehlerkorrektur von Datenströmen (DS) ähnlicher Anforderung ausgestaltet sind, wobei mindestens zwei Zwischendatenströme mit unterschiedlichen Maßnahmen zur Fehlererkennung und/oder Fehlerkorrektur behandelt werden.

11. Anordnung nach Anspruch 9 oder 10,
bei der zur Bildung mindestens eines Teils der Gruppierungsstufen (MUX1, MUX2) eine Multiplexerstufe mit einer vorgebbaren Anzahl von Multiplexern vorgesehen ist.

12. Anordnung nach einem der Ansprüche 9 bis 11,
bei der mindestens ein Teil der Mittel (PLj) zur Fehlererkennung und/oder Fehlerkorrektur derart ausgestaltet ist, dass die Fehlererkennung und/oder Fehlerkorrektur für den jeweiligen Zwischendatenstrom (ZDS) an die vorgebbare Anforderung angepasst ist.

13. Anordnung nach einem der Ansprüche 9 bis 12,
bei der die zweite Gruppierungseinheit (MUX2) derart ausgestaltet ist, dass ein fehlersicheres Verfahren durchgeführt wird.

14. Anordnung nach einem der Ansprüche 9 bis 13,
bei der für Datenströme (DS), für die keine Fehlererkennung und/oder Fehlerkorrektur erforderlich ist, kein Mittel (PLj) zur Fehlererkennung und/oder Fehlerkorrektur vorgesehen ist.

## Claims

1. Method for multiplexing a plurality of digital data streams (DS) to form a digital composite data stream (GDS), wherein
- the data streams (DS) are grouped to form at least two digital intermediate data streams (ZDS),
- the grouping is carried out such that data streams (DS) of similar type are jointly grouped to form an intermediate data stream (ZDS) and data streams (DS) of different type are grouped into different intermediate data streams (ZDS), with at least one intermediate data stream (ZDS) being formed from at least two data streams (DS),
- a measure for error identification and/or error correction of the intermediate data stream (ZDS) is implemented respectively for one and at least one further of the intermediate data streams (ZDS),
- the intermediate data streams (ZDS) are grouped to form the composite data stream (GDS),
- at least two data streams (DS) have different predeterminable requirements in terms of a required measure for error identification and/or error correction,
- data streams (DS) having a similar requirement are grouped to form a joint intermediate data stream (ZDS) and
- at least two intermediate data streams are processed with different measures for error identification and/or error correction.

2. Method for demultiplexing a digital composite data stream (GDS) to form a plurality of digital data streams (DS), wherein
- the composite data stream (GDS) is divided into at least two digital intermediate data streams (ZDS), with data streams (DS) of similar type contained in the composite data stream (GDS) being jointly grouped to form an intermediate data stream (ZDS) and data streams (DS) of different type being grouped into different intermediate data streams (ZDS), with at least one intermediate data stream (ZDS) being formed from at least two data streams (DS),
- a measure for error identification and/or error correction of the intermediate data stream (ZDS) is implemented respectively for one and at least one further of the intermediate data streams (ZDS),
- the intermediate data streams (ZDS) are split into the data streams (DS),
- at least two data streams (DS) have different predeterminable requirements in terms of a required measure for error identification and/or error correction,
- data streams (DS) having a similar requirement are grouped to form a joint intermediate data stream (ZDS) and
- at least two intermediate data streams are processed with different measures for error identification and/or error correction.

3. Method according to claim 1 or 2, wherein at least some of the groupings or assignments are produced by multiplexing or demultiplexing data.

4. Method according to one of the preceding claims, wherein for at least some of the intermediate data streams (ZDS) the measure for error identification and/or error correction is configured such that error identification and/or error correction is tailored to the predeterminable requirement for the respective intermediate data stream (ZDS).

5. Method according to claim 1 or according to claim 3 or 4 in combination with claim 1, wherein an error-proof method is used when grouping the intermediate data streams (ZDS) into the composite data stream (GDS).

6. Method according to claim 2 or according to claim 3 or 4 in combination with claim 2, wherein an error-proof method is used when splitting the composite data stream (GDS) into the intermediate data streams (ZDS).

7. Method according to one of claims 1 to 6,
- wherein an initialisation phase is carried out at the start of the method and
- wherein the initialisation phase is carried out using an error-proof transmission medium.

8. Method according to one of claims 1 to 7,
- wherein data streams (DS), for which no error identification and/or error correction is required, are not taken into account during grouping into the intermediate data streams (ZDS) and
- wherein these data streams (DS) are grouped directly with the intermediate data streams (ZDS) to form the composite data stream (GDS).

9. Arrangement for multiplexing a plurality of digital data streams (DS) to form a composite data stream (GDS), wherein
- a first grouping stage (MUX1) is provided having at least two first grouping units (MUX1i, i=1 ... m), with which the data streams (DS) are grouped to form at least two digital intermediate data streams (ZDS), with grouping being carried out such that data streams (DS) of similar type are jointly grouped to form an intermediate data stream (ZDS) and data streams (DS) of different type are grouped into different intermediate data streams (ZDS), with at least one intermediate data stream (ZDS) being formed from at least two data streams (DS) and the data streams (DS) in different intermediate data streams (ZDS) having different predeterminable requirements in terms of a measure for error identification and/or error correction,
- a means (PLj, j=1 ... n) for error identification and/or error correction of the intermediate data streams (ZDS) is provided for one and at least one further of the intermediate data streams (ZDS),
- the means (PLj) are coupled to the first grouping units (MUX1i) and the means (PLj) are configured respectively for error identification and/or error correction of data streams (DS) of similar requirement, with at least two intermediate data streams being processed with different measures for error identification and/or error correction and
- a second grouping stage (MUX2) is provided having a second grouping unit (MUX2), with which the intermediate data streams (ZDS) are grouped to form the composite data stream (GDS).

10. Arrangement for demultiplexing a digital composite data stream (GDS) to form a plurality of digital data streams (DS), wherein
- a second grouping stage (MUX2) is provided with a second grouping unit (MUX2), with which the composite data stream (GDS) is split into at least two digital intermediate data streams (ZDS), with data streams (DS) of similar type contained in the composite data stream (GDS) being jointly grouped to form an intermediate data stream (ZDS) and data streams (DS) of different type being grouped into different intermediate data streams (ZDS), with at least one intermediate data stream (ZDS) being formed from at least two data streams (DS) and the data streams (DS) in different intermediate data streams (ZDS) having different predeterminable requirements in terms of a measure for error identification and/or error correction,
- a means (PLj, j=1 ... n) for error identification and/or error correction of the intermediate data streams (ZDS) is provided for one and at least one further of the intermediate data streams (ZDS),
- wherein a first grouping stage (MUX1) is provided, having at least two first grouping units (MUX1i, i=1 ... m), with which a t least two of the intermediate data streams (ZDS) are split into the data streams (DS),
- wherein the first grouping units (MUX1i) are coupled to the means (PLj) and the means (PLj) are configured respectively for error identification and/or error correction of data streams (DS) of similar requirement, with at least two intermediate data streams being processed with different measures for error identification and/or error correction.

11. Arrangement according to claim 9 or 10, wherein a multiplexer stage with a predeterminable number of multiplexers is provided to form at least some of the grouping stages (MUX1, MUX2).

12. Arrangement according to one of claims 9 to 11, wherein at least some of the means (PLj) for error identification and/or error correction is configured such that error identification and/or error correction is tailored to the predeterminable requirement for the respective intermediate data stream (ZDS).

13. Arrangement according to one of claims 9 to 12, wherein the second grouping unit (MUX2) is configured such that an error-proof method is implemented.

14. Arrangement according to one of claims 9 to 13, wherein no means (PLj) for error identification and/or error correction is provided for data streams (DS) for which no error identification and/or error correction is/are required.

## Revendications

1. Procédé de multiplexage d'une pluralité de flux de données numériques (DS) en un flux global de données numériques (GDS), dans lequel
- les flux de données (DS) sont groupés en au moins deux flux intermédiaires de données numériques (ZDS),
- le groupement est réalisé de telle manière que les flux de données (DS) identiques sont groupés en commun en un flux intermédiaire de données et les flux de données (DS) non identiques en différents flux intermédiaires de données (ZDS), au moins un flux intermédiaire de données (ZDS) étant formé à partir d'au moins deux flux de données (DS),
- une mesure destinée à la détection d'erreurs et/ou à la correction d'erreurs du flux intermédiaire de données (ZDS) est réalisée pour un flux intermédiaire de données et pour au moins un autre des flux intermédiaires de données (ZDS),
- les flux intermédiaires de données (ZDS) sont groupés en flux global de données (GDS),
- au moins deux flux de données (DS) posent des exigences différentes, prédéfinissables en ce qui concerne une mesure nécessaire destinée à la détection d'erreurs et/ou à la correction d'erreurs,
- des flux de données (DS) d'exigence similaire sont groupés en un flux intermédiaire de données (ZDS) commun et
- au moins deux flux intermédiaires de données sont traités avec différentes mesures de détection d'erreurs et/ou de correction d'erreurs.

2. Procédé de démultiplexage d'un flux global de données numériques (GDS) en une pluralité de flux de données numériques (DS), dans lequel
- le flux global de données (GDS) est divisé en au moins deux flux intermédiaires de données numériques (ZDS), les flux de données identiques (DS) contenus dans le flux global de données (GDS) étant groupés en commun en un flux intermédiaire de données (ZDS) et les flux de données non identiques (DS) en différents flux intermédiaires de données (ZDS), au moins un flux intermédiaire de données (ZDS) étant formé à partir d'au moins deux flux de données (DS),
- une mesure destinée à la détection d'erreurs et/ou à la correction d'erreurs du flux intermédiaire de données (ZDS) est réalisée pour un flux intermédiaire de données et pour au moins un autre des flux intermédiaire de données (ZDS),
- les flux intermédiaires de données (ZDS) sont divisés en flux de données (DS),
- au moins deux flux de données (DS) posent des exigences différentes, prédéfinissables en ce qui concerne une mesure nécessaire destinée à la détection d'erreurs et/ou à la correction d'erreurs,
- des flux de données (DS) d'exigence similaire sont groupés en un flux intermédiaire de données (ZDS) commun et
- au moins deux flux intermédiaires de données sont traités avec différentes mesures de détection d'erreurs et/ou de correction d'erreurs.

3. Procédé selon la revendication 1 ou 2,
dans lequel au moins une partie des groupements resp. des divisions est réalisée par multiplexage resp. démultiplexage des données.

4. Procédé selon l'une quelconque des revendications précédentes,
dans lequel la mesure destinée à la détection d'erreurs et/ou à la correction d'erreurs est conçue pour au moins une partie des flux intermédiaires de données (ZDS), de telle manière que la détection d'erreurs et/ou la correction d'erreurs sont adaptées à l'exigence prédéfinissable pour le flux intermédiaire respectif de données (ZDS).

5. Procédé selon la revendication 1 ou selon la revendication 3 ou 4 en combinaison avec la revendication 1, dans lequel un procédé protégé contre les erreurs est utilisé lors du groupement des flux intermédiaires de données (ZDS) en flux global de données (GDS).

6. Procédé selon la revendication 2 ou selon la revendication 3 ou 4 en combinaison avec la revendication 2, dans lequel un procédé protégé contre les erreurs est utilisé lors de la division du flux global de données (GDS) en flux intermédiaires de données (ZDS).

7. Procédé selon l'une quelconque des revendications 1 à 6,
- dans lequel une phase d'initialisation est exécutée au début du procédé et
- dans lequel la phase d'initialisation est réalisée par l'intermédiaire d'un milieu de transmission protégé contre les erreurs.

8. Procédé selon l'une quelconque des revendications 1 à 7,
- dans lequel les flux de données (DS), pour lesquels aucune détection d'erreurs et/ou correction d'erreurs n'est nécessaire, ne sont pas pris en compte lors du groupement en flux intermédiaires de données (ZDS), et
- dans lequel ces flux de données (DS) sont groupés en flux global de données (GDS) directement avec les flux intermédiaires de données (ZDS).

9. Dispositif de multiplexage d'une pluralité de flux de données numériques (DS) en un flux global de données (GDS), dans lequel
- un premier étage de groupement (MUX1) est prévu avec au moins deux premières unités de groupement (MUX1i, i = 1 ... m), au moyen desquelles les flux de données (DS) sont groupés en au moins deux flux intermédiaires de données numériques (ZDS), le groupement étant effectué de telle manière que les flux de données identiques (DS) sont groupés en commun en un flux intermédiaire de données (ZDS) et que les flux de données non identiques (DS) sont groupés en différents flux intermédiaires de données (ZDS), au moins un flux intermédiaire de données (ZDS) étant formé à partir d'au moins deux flux de données (DS) et les flux de données (DS) dans différents flux intermédiaires de données (ZDS) posant des exigences différentes, prédéfinissables en ce qui concerne une mesure nécessaire destinée à la détection d'erreurs et/ou à la correction d'erreurs,
- un moyen (PLj, j = 1 ... n) de détection d'erreurs et/ou de correction d'erreurs des flux intermédiaires de données (ZDS) est prévu pour un flux intermédiaire de données et pour au moins un autre flux intermédiaire de données (ZDS),
- les moyens (PLj) sont couplés aux premières unités de groupement (MUX1i) et les moyens (PLj) sont respectivement exécutés pour la détection d'erreurs et/ou la correction d'erreurs de flux de données (DS) d'exigence similaire, au moins deux flux intermédiaires de données étant traités avec différentes mesures de détection d'erreurs et/ou de correction d'erreurs, et
- un deuxième étage de groupement (MUX2) est prévu avec une deuxième unité de groupement (MUX2), au moyen de laquelle les flux intermédiaires de données (ZDS) sont groupés en flux global de données (GDS).

10. Dispositif de démultiplexage d'un flux global de données numériques (GDS) en une pluralité de flux de données numériques (DS), dans lequel
- un deuxième étage de groupement (MUX2) est prévu avec une deuxième unité de groupement (MUX2), au moyen de laquelle le flux global de données (GDS) est divisé en au moins deux flux intermédiaires de données numériques (ZDS), les flux de données identiques (DS) contenus dans le flux global de données (GDS) étant groupés en commun en un flux intermédiaire de données (ZDS) et les flux de données non identiques (DS) en différents flux intermédiaires de données (ZDS), au moins un flux intermédiaire de données (ZDS) étant formé à partir d'au moins deux flux de données (DS) et les flux de données (DS) dans différents flux intermédiaires de données (ZDS) posant des exigences différentes, prédéfinissables en ce qui concerne une mesure nécessaire destinée à la détection d'erreurs et/ou à la correction d'erreurs,
- un moyen (PLj, j = 1 ... n) de détection d'erreurs et/ou de correction d'erreurs des flux intermédiaires de données (ZDS) est prévu pour un flux intermédiaire de données et pour au moins un autre flux intermédiaire de données (ZDS),
- dans lequel un premier étage de groupement (MUX1) est prévu avec au moins deux premières unités de groupement (MUX1i, i = 1 ... m), au moyen desquelles au moins deux des flux intermédiaires de données (ZDS) sont divisés en flux de données (DS),
- dans lequel les premières unités de groupement (MUX1i) sont couplées aux moyens (PLj) et les moyens (PLj) sont respectivement exécutés pour la détection d'erreurs et/ou la correction d'erreurs de flux de données (DS) d'exigence similaire, au moins deux flux intermédiaires de données étant traités avec différentes mesures de détection d'erreurs et/ou de correction d'erreurs.

11. Dispositif selon la revendication 9 ou 10,
dans lequel un étage de multiplexeur est prévu avec un nombre prédéfinissable de multiplexeurs pour la formation d'au moins une partie des étages de groupement (MUX1, MUX2).

12. Dispositif selon l'une quelconque des revendications 9 à 11,
dans lequel au moins une partie des moyens (PLj) de détection d'erreurs et/ou de correction d'erreurs est conçue de telle manière que la détection d'erreurs et/ou la correction d'erreurs pour le flux intermédiaire respectif de données (ZDS) sont adaptées à l'exigence prédéfinissable.

13. Dispositif selon l'une quelconque des revendications 9 à 12,
dans lequel la deuxième unité de groupement (MUX2) est conçue de telle manière qu'un procédé protégé contre les erreurs est exécuté.

14. Dispositif selon l'une quelconque des revendications 9 à 13,
dans lequel aucun moyen (PLj) de détection d'erreurs et/ou de correction d'erreurs n'est prévu pour les flux de données (DS) pour lesquels une détection d'erreurs et/ou une correction d'erreurs ne sont pas nécessaires.
